# EUROPEAN PATENT SPECIFICATION

(11) **EP 2 715 151 B1**
(45) Date of publication and mention of the grant of the patent: **02.11.2016**
(21) Application number: 12793126.9
(22) Date of filing: 24.05.2012
(51) Int. Cl.: F15B 15/14, F16J 1/12, F16F 9/32

(54) **PISTON MOUNTING**
KOLBENHALTERUNG
MONTAGE DE PISTON

(30) Priority: 27.05.2011 SE 1150496
(43) Date of publication of application: 09.04.2014
(73) Proprietor: Wipro Infrastructure Engineering AB, 931 23 Skelleftea (SE)
(72) Inventor: ALA, Patrik, S-931 64 Skellefteå (SE)
(74) Representative: Zacco Sweden AB
(86) International application number: PCT/SE2012/050559
(87) International publication number: WO 2012/166039

(56) References cited:
- FR-A1- 2 420 677
- US-A- 2 446 846
- US-A- 2 758 897
- US-A- 3 994 604

## Description

The present invention concerns an arrangement to mount a piston onto a piston rod for a hydraulic or pneumatic piston-cylinder unit according to the introduction to claim 1.

Various ways of mounting a piston onto a piston rod are well known for one skilled in the arts. A commonly used method is to arrange the piston with a threaded centre hole and to arrange the end of the piston rod with a section that is threaded with a thread that corresponds to the thread of the piston. The piston is screwed onto the piston rod, and when the piston reaches the bottom of the thread of the piston rod a relatively large torque is applied to the piston. The piston is in this way brought into contact with the thread of the piston rod with a prestress, since the threads and the material are deformed to a certain extent. The torque that is applied ensures that the piston does not become loose during the period under which the cylinder is working.

A major disadvantage of this method is that repairs in the field become difficult to carry out. The large torques which are required to fix the piston onto the piston rod become difficult to achieve using the tools that are available in the field.

Various arrangements and methods for the mounting of a piston onto a piston rod have been suggested in order to avoid these problems. One such arrangement and method are to equip the piston with a radial hole and the piston rod with an indentation. The piston is turned during mounting such that its hole coincides with the indentation of the piston rod. A pin or a bolt is subsequently passed through the hole into the indentation and there attached with a lock arrangement in association with the pin. This gives a simple mounting and demounting of the piston. A major disadvantage of this arrangement and method is that a rotation of the piston relative to the piston rod when the pin is present in the radial hole and indentation, is that the two parts act as a cutter on the pin from the shear forces that arise.

FR 2420677 discloses an arrangement for the mounting of a piston onto a piston rod for a hydraulic piston-cylinder unit according to the preamble of claim 1.

One purpose of the present invention is to achieve an arrangement that makes it possible to mount and demount a piston onto a piston rod in a simple manner.

This purpose is achieved through an arrangement according to claim 1, wherein the piston is arranged with a penetrating hole with an internal thread and a first axial groove, and the groove is intended to be aligned with a second axial groove present in a section of the piston rod when the piston is mounted on the piston rod, wherein the groove after the alignment forms an indentation intended to receive a securing means. The securing means is prevented from leaving the space through a locking means being introduced into a peripheral groove present in the end of the piston rod, which locking means covers the indentation.

The invention will be described below with reference to the attached drawings, of which:
Figure 1 shows a sectional view of a part of a piston-cylinder unit,
Figure 2 shows an end view of a piston,
Figure 3 shows a perspective view of one side of a piston,
Figure 4 shows a perspective view of a second side of the piston in Figure 3
Figure 5 shows an end view of a piston rod, and
Figure 6 shows a side view of the piston rod in Figure 5.

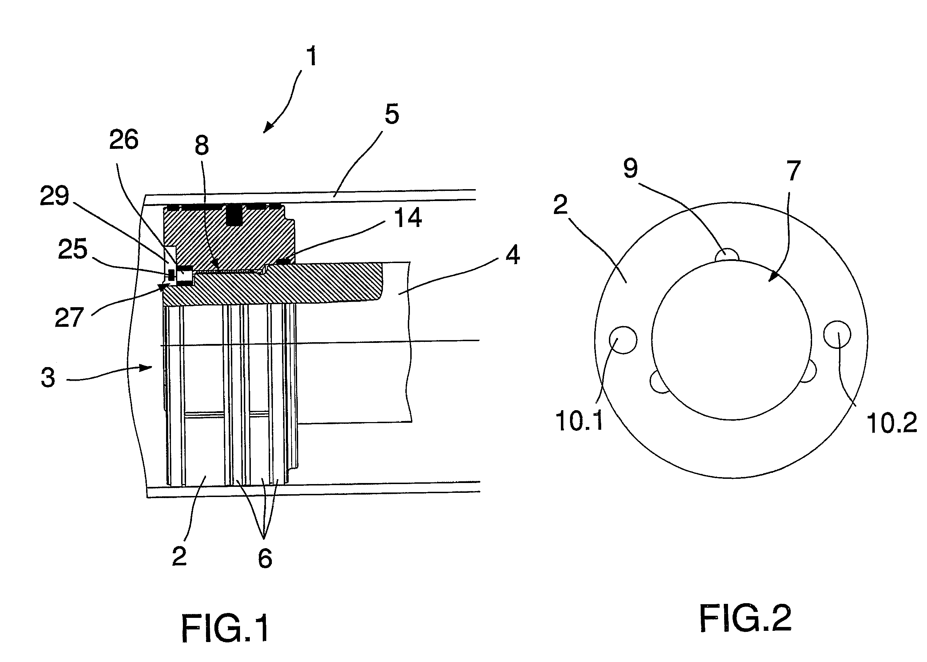

Figure 1 shows a cross-section of a hydraulic or pneumatic piston-cylinder unit 1. A piston 2 is mounted on the end 3 of a piston rod 4. The piston 2 is inserted into a cylinder 5 in a manner that allows sliding, and provided with customary seals 6 in a known manner.

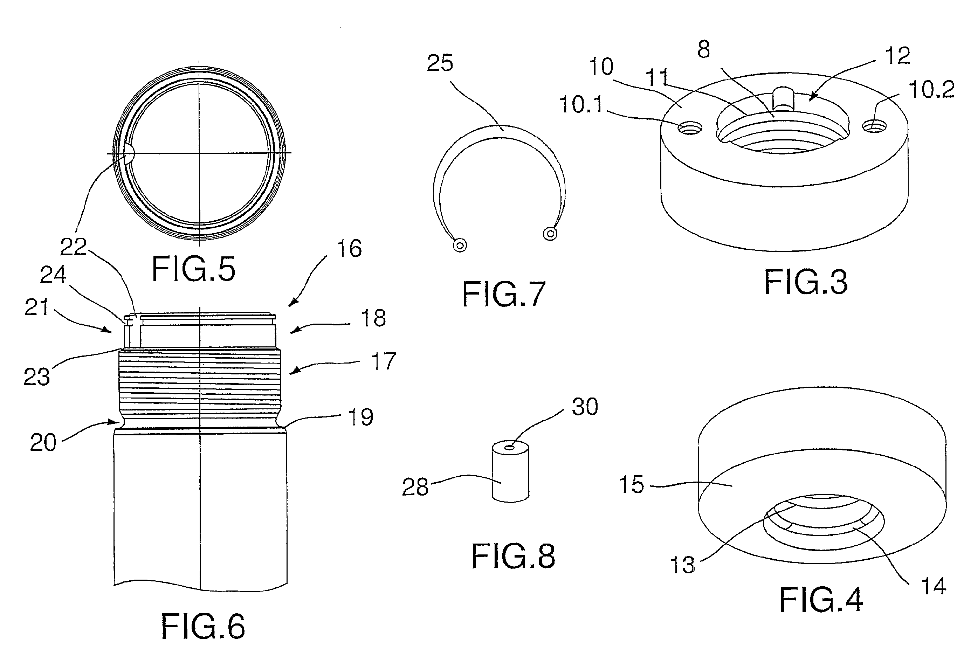

According to Figures 1-2, the piston 2 comprises a circularly cylindrical body with an axial penetrating hole 7. The hole 7 is arranged with an internally threaded section 8 and with an axial groove 9. The groove 9 is created by, for example, milling: it extends from one side 10 of the piston and ends at the position 11 at which the threaded section 8 starts, or in the close vicinity of this position. The cross-section of the groove 9 may be of freely chosen form, but is advantageously semi-circular. It should, however, be realised that the groove 9 may demonstrate a cross-section that is square, triangular or of any other geometric form. It should be realised also that more than one groove may be created, distributed around the internal surface of the hole 7 as shown in Figure 3.

According to Figure 3, the side 10 of the piston comprises also a pair of openings or indentations 10.1, 10.2. Each opening 10.1, 10.2 may be threaded, and is intended to receive a bolt or screw. The purpose of these bolts is that a tool that is inserted between the bolts is used to demount the piston. The openings 10.1, 10.2 in a second embodiment lack threads. The openings instead are intended to receive two pins, which are pressed into the openings 10.1, 10.2, arranged at a tool. In connection with the position 13 at which the threaded section 8 ends, there is arranged a seal 14, see Figures 1 and 4. The seal 14 may comprise a sealing ring with support rings, or what is known as a "packing box seal". The purpose of this is to prevent leakage between the piston and the piston rod.

According to Figures 5-6, the end 16 of the piston rod, the end that is located inside the cylinder 5, comprises a section with a thread 17. The thread 17 is intended to interact with the thread 8 in the axial hole 7 of the piston 2. The thread 17 starts a certain distance 18 in from the end 16 of the piston rod and is provided with a shoulder 19 at the end 20 of the thread 17. In the part 21 at the end 16 of the piston rod 4 that lacks a thread, there is arranged an axial groove 22 with a cross-section that advantageously corresponds to the groove 9 in the piston 2. The groove 22 extends from the end 16 of the piston rod along the piston rod 4 to the position 23 at which the thread 17 starts, or in the close vicinity of the start of the thread. It should be realised that the end 16 of the piston rod 4 described above can be provided with more than one groove distributed around the periphery of the piston rod.

If the hole 7 in the piston 2 is threaded along its complete length, i.e. the thread starts at one side 10 of the piston, extends through the piston 2, and ends at the second side 15 of the piston, then the grooves can be present in the thread. This means that the grooves in the piston rod 4 should be present in the thread of the piston rod, such that it will be possible to adapt the grooves in the piston and those in the piston rod to each other.

A peripheral opening in the form of a groove 24 has been created in association with the end 16 of the piston rod. It is an advantage that the groove 24 extend along the complete periphery of the piston rod 4. The groove 24 is intended to receive and retain a locking means 25. The locking means 25 may comprise a spring-loaded ring or another form of self-tensioning locking means. It is an advantage that the locking means 25 comprise a spring-loaded groove-mounted ring.

The piston 2 is screwed onto the threaded 17 section of the piston rod 4 until the end 13 of the thread of the piston 2 reaches the bottom of the shoulder 19 of the piston rod 4. The phrase "reaches the bottom" is here used to denote the condition in which the piston can no longer be screwed further onto the piston rod. The piston 2 is subsequently screwed backwards to a sufficient distance that the groove 9 of the piston 2 coincides with the groove 22 of the piston rod 4. When these coincide as is shown in Figure 1, the grooves form an indentation 26 that reaches the bottom in association with the threads 8, 17 of the piston 2 and the piston rod 4, and that has an opening 27 that opens out into a direction away from the piston 2 and the end 16 of the piston rod.

A securing means 28 is subsequently introduced into the indentation 26. The securing means 28 may comprise a steel pin or bolt that has been given a form corresponding to the indentation 26. The length of the securing means 28 is so adapted that when the securing means 28 makes contact with the bottom with the threads 8, 17 of the piston and piston rod, it extends along the indentation 26 to the peripheral groove 24 of the piston rod 4. The locking means 25, in this example a locking ring, is subsequently introduced into the peripheral groove 24 and prevents the securing means 28 from being displaced out from the indentation 26. The locking means 25 prevents displacement of the securing means 28 out from the indentation 26 through it covering at least partially the opening 27 of the indentation.

In one preferred embodiment, the piston 2 is designed with an indentation 29 at the side 10 that coincides with the end 16 of the piston rod when the piston 2 is mounted. The indentation 29 is so adapted that when the piston 2 is mounted onto the piston rod 4 and the grooves 9, 22 are adapted against each other to form an indentation 26, the end 16 of the piston rod is located at the same level as the side 10 of the piston that demonstrates the indentation 29, as shown in Figure 1. This gives the advantage that the locking means 25 can be mounted into the peripheral groove 24 of the piston rod 4, even if the side of the piston and the end of the piston rod are at the same level.

The piston 2 may be designed also in such a manner that the grooved end 16 of the piston rod 4 protrudes through the piston 2 when the piston has been screwed onto the piston rod such that the piston is at the bottom. The purpose of this is to facilitate the application of the locking means 25 in the peripheral groove 24.

The securing means 28 has a form that corresponds to the form of the indentation 26: this is advantageously circularly cylindrical. The advantage of this is that it becomes easy to manufacture both the securing means 28 and the indentation 26. Furthermore, a circularly cylindrical form provides increased resistance to shearing, since the securing means 28 has the possibility to rotate around its own longitudinal axis inside the indentation 26, which prevents the shear force acting at the same region of the securing means 28 at all times. The securing means 28 is further provided with an axial opening 30 at the side that faces the locking means 25. The opening is arranged with threads in order to simplify demounting of the securing means 28, by, for example, the introduction of a screw into the opening 30 and subsequently withdrawing the securing means 28 from the indentation 26 with the aid of the screw.

The arrangement and method described above for use during the mounting of a piston onto a piston rod give a torque-free locking of the piston to the piston rod. This has the advantage that not only mounting in a factory but also repairs that require demounting and mounting in the field are made considerably easier. This is the case since no torque needs to be applied to demount or mount the piston onto the piston rod: all that is required is that a locking means and a securing means are removed from a groove and an indentation, respectively, with the aid of simple tools.

The present invention is not limited to what has been described above and shown in the drawings: it can be changed and modified in several different ways within the scope of the innovative concept defined by the attached patent claims.

## Claims

1. An arrangement for the mounting of a piston (2) onto a piston rod (4) for a hydraulic or pneumatic piston-cylinder unit (1), which arrangement comprises the piston rod (4) and the piston (2) which is provided with a penetrating hole (7) with an internal thread (8) and a first axial groove (9), which groove (9) is intended to be aligned with a second axial groove (22) arranged in association with a section (21) of the piston rod (4) when the piston (2) is mounted onto the piston rod (4), wherein the grooves (9, 22) after the alignment form an indentation (26) intended to receive a securing means (28), **characterised in that** the end (16) of the piston rod (4) comprises a peripheral opening (24) for a locking means (25) that prevents the securing means (28) from being displaced from the indentation (26).

2. The arrangement according to claim 1, whereby the securing means (28) comprises a steel pin.

3. The arrangement according to claim 1, whereby the peripheral opening (24) comprises a groove.

4. The arrangement according to claim 1, whereby the locking means (25) comprises a lock ring.

5. The arrangement according to any one of the preceding claims, whereby the locking means (25) is so designed that it covers at least partially the indentation (26) when the locking means (25) has been inserted into the opening (24) at the end (16) of the piston rod (4).

6. The arrangement according to claim 1, whereby the groove (9) in the piston (2) ends in association with the thread (8) of the piston (2).

7. The arrangement according to any one of the preceding claims, whereby the piston (2) is arranged with two or more grooves.

8. The arrangement according to claim 1, whereby the axial groove (22) of the piston rod (4) ends in association with the thread (17) of the piston rod (4).

9. The arrangement according to any one of claims 1, 5 and 8, whereby the piston rod (4) is arranged with two or more grooves.

10. The arrangement according to any one of the preceding claims, whereby the side (10) of the piston that comprises the groove (9) is arranged with a pair of openings (10.1, 10.2) intended to receive bolts or a tool during demounting of the piston.

11. The arrangement according to any one of the preceding claims, whereby the length of the threaded section (17) of the piston rod (4) is so adapted that the end (16) of the piston rod protrudes out from the piston (2) when the piston (2) is mounted and the grooves (9, 22) are aligned with each other.

12. The arrangement according to any one of the preceding claims, whereby the piston (2) comprises a seal (14) to prevent leakage between the piston and the piston rod.

13. The arrangement according to claim 1, whereby the grooves (9, 22) in the piston (2) and the piston rod (4) have the form of semicircles.

14. The arrangement according to claim 1, whereby the securing means (28) is arranged with an opening (30) for a tool intended to be used during demounting of the securing means (28).

15. A method for the mounting of a piston (2) onto a piston rod (4) according to claim 1, **characterised by** the following steps:
- that the piston (2) is screwed onto the thread (17) of the piston rod (4) until the piston (2) reaches the bottom,
- that the piston (2) is screwed back to the first position at which the grooves (9, 22) coincide and form the indentation (26),
- that the securing means (28) is introduced into the indentation (26), and
- that the locking means (25) is introduced into the peripheral opening (24).

## Patentansprüche

1. Anordnung zum Montieren eines Kolbens (2) auf eine Kolbenstange (4) für eine hydraulische oder pneumatische Kolben-Zylindereinheit (1), welche Anordnung die Kolbenstange (4) und den Kolben (2) umfasst, der mit einem Durchdringungsloch (7) mit einem Innengewinde (8) und einer ersten axialen Rille (9) versehen ist, welche Rille (9) dafür eingerichtet ist, auf die zweite axiale Rille (22) ausgerichtet zu werden, welche in Verbindung mit einem Abschnitt (21) der Kolbenstange (4) angeordnet ist, wenn der Kolben (2) auf der Kolbenstange (4) montiert ist, wobei die Rillen (9, 22) nach dem Ausrichten eine Vertiefung (26) bilden, die dafür eingerichtet ist, ein Befestigungsmittel (28) aufzunehmen, **dadurch gekennzeichnet, dass** das Ende (16) der Kolbenstange (4) eine periphere Öffnung (24) für ein Verriegelungsmittel (25) aufweist, welches verhindert, dass das Befestigungsmittel (28) von der Vertiefung (26) verschoben wird.

2. Anordnung nach Anspruch 1, wobei das Befestigungsmittel (28) einen Stahlstift umfasst.

3. Anordnung nach Anspruch 1, wobei die periphere Öffnung (24) eine Rille umfasst.

4. Anordnung nach Anspruch 1, wobei das Verriegelungsmittel (25) einen Verschlussring umfasst.

5. Anordnung nach einem der vorgehenden Ansprüche, wobei das Verriegelungsmittel (25) so ausgeformt ist, dass es zumindest teilweise die Vertiefung (26) abdeckt, wenn das Verriegelungsmittel (25) in die Öffnung (24) am Ende (16) der Kolbenstange (4) eingeführt ist.

6. Anordnung nach Anspruch 1, wobei die Rille (9) im Kolben (2) in Verbindung mit dem Gewinde (8) des Kolbens (2) endet.

7. Anordnung nach einem der vorgehenden Ansprüche, wobei der Kolben (2) mit zwei oder mehr Rillen eingerichtet ist.

8. Anordnung nach Anspruch 1, wobei die axiale Rille (22) der Kolbenstange (4) in Verbindung mit dem Gewinde (17) der Kolbenstange (4) endet.

9. Anordnung nach einem der Ansprüche 1, 5 und 8, wobei die Kolbenstange (4) mit zwei oder mehr Rillen eingerichtet ist.

10. Anordnung nach einem der vorgehenden Ansprüche, wobei diejenige Seite (10) des Kolbens, die die Rille (9) aufweist, mit einem Paar Öffnungen (10.1, 10.2) eingerichtet ist, die dafür eingerichtet sind, Bolzen oder ein Werkzeug während der Demontage des Kolbens aufzunehmen.

11. Anordnung nach einem der vorgehenden Ansprüche, wobei die Länge des Gewindeabschnitts (17) der Kolbenstange (4) so eingerichtet ist, dass das Ende (16) der Kolbenstange vom Kolben (2) hervorragt, wenn der Kolben (2) montiert ist und die Rillen (9, 22) mit einander fluchten.

12. Anordnung nach einem der vorgehenden Ansprüche, wobei der Kolben (2) eine Abdichtung (14) umfasst, um eine Undichtheit zwischen dem Kolben und der Kolbenstange zu verhindern.

13. Anordnung nach Anspruch 1, wobei die Rillen (9, 22) in dem Kolben (2) und der Kolbenstange (4) halbrund sind.

14. Anordnung nach Anspruch 1, wobei das Befestigungsmittel (28) mit einer Öffnung (30) für ein Werkzeug für die Anwendung während der Demontage des Befestigungsmittels (28) eingerichtet ist.

15. Verfahren zum Montieren eines Kolbens (2) auf eine Kolbenstange (4) nach Anspruch 1, **gekennzeichnet durch** die folgenden Schritte:
- dass der Kolben (2) auf das Gewinde (17) der Kolbenstange (4) aufgeschraubt wird, bis der Kolben (2) den Boden erreicht,
- dass der Kolben (2) wieder zur ersten Position geschraubt wird, wo die Rillen (9, 22) zusammenfallen und die Vertiefung (26) bilden,
- dass das Befestigungsmittel (28) in die Vertiefung (26) eingeführt wird, und
- dass das Verriegelungsmittel (25) in die periphere Öffnung (24) eingeführt wird.

## Revendications

1. Dispositif pour le montage d'un piston (2) sur une tige de piston (4) d'une unité piston-cylindre hydraulique ou pneumatique (1), ledit dispositif comprenant la tige de piston (4) et le piston (2), qui est pourvu d'un trou de pénétration (7) avec un filetage intérieur (8) et une première rainure axiale (9), ladite rainure (9) étant destinée à être alignée avec une deuxième rainure axiale (22) agencée en liaison avec une section (21) de la tige de piston (4) lorsque le piston (2) est monté sur la tige de piston (4), dans lequel les rainures (9, 22) après l'alignement forment une cavité (26) destinée à recevoir un moyen de fixation (28), **caractérisé en ce que** l'extrémité (16) de la tige de piston (4) comporte une ouverture périphérique (24) pour un moyen de verrouillage (25) qui empêche le moyen de fixation (28) d'être déplacé depuis la cavité (26).

2. Dispositif selon la revendication 1, dans lequel le moyen de fixation (28) comprend une broche en acier.

3. Dispositif selon la revendication 1, dans lequel l'ouverture périphérique (24) comprend une rainure.

4. Dispositif selon la revendication 1, dans lequel le moyen de verrouillage (25) comprend une bague de verrouillage.

5. Dispositif selon l'une quelconque des revendications précédentes, dans lequel le moyen de verrouillage (25) est conçu d'une telle manière qu'il recouvre au moins partiellement la cavité (26) lorsque le moyen de verrouillage (25) a été insérée dans l'ouverture (24) à l'extrémité (16) de la tige de piston (4).

6. Dispositif selon la revendication 1, dans lequel la rainure (9) dans le piston (2) se termine en liaison avec le filetage (8) du piston (2).

7. Dispositif selon l'une quelconque des revendications précédentes, dans lequel le piston (2) est pourvu de deux ou de plusieurs rainures.

8. Dispositif selon la revendication 1, dans lequel la rainure axiale (22) de la tige de piston (4) se termine en liaison avec le filetage (17) de la tige de piston (4).

9. Dispositif selon l'une quelconque des revendications 1, 5 et 8, dans lequel la tige de piston (4) est pourvue de deux ou de plusieurs rainures.

10. Dispositif selon l'une quelconque des revendications précédentes, dans lequel le côté (10) du piston qui comprend la rainure (9) est pourvu d'une paire d'ouvertures (10.1, 10.2) destinées à recevoir des boulons ou un outil lors du démontage de la piston.

11. Dispositif selon l'une quelconque des revendications précédentes, dans lequel la longueur de la partie filetée (17) de la tige de piston (4) est adaptée d'une telle manière que l'extrémité (16) de la tige de piston fait saillie à partir du piston (2), lorsque le piston (2) est monté et que les rainures (9, 22) sont alignées les unes avec les autres.

12. Dispositif selon l'une quelconque des revendications précédentes, dans lequel le piston (2) comporte un joint d'étanchéité (14) afin d'empêcher une fuite entre le piston et la tige de piston.

13. Dispositif selon la revendication 1, dans lequel les rainures (9, 22) dans le piston (2) et la tige de piston (4) ont la forme de demi-cercle.

14. Dispositif selon la revendication 1, dans lequel le moyen de fixation (28) est agencé avec une ouverture (30) pour un outil destiné à être utilisé pendant le démontage du moyen de fixation (28).

15. Procédé de montage d'un piston (2) sur une tige de piston (4) selon la revendication 1, **caractérisé par** les étapes consistant en:
- ce que le piston (2) est vissé sur le filetage (17) de la tige de piston (4) jusqu'à ce que le piston (2) atteigne le fond,
- ce que le piston (2) est revissé à la première position dans laquelle les rainures (9, 22) coïncident et forment la cavité (26),
- ce que le moyen de fixation (28) est introduit dans la cavité (26), et
- ce que le moyen de verrouillage (25) est introduit dans l'ouverture périphérique (24).
